# EUROPÄISCHE PATENTSCHRIFT

(11) **EP 0 530 770 B1**
(45) Veröffentlichungstag und Bekanntmachung des Hinweises auf die Patenterteilung: **20.12.1995**
(21) Anmeldenummer: 92114984.5
(22) Anmeldetag: 02.09.1992
(51) Int. Cl.: H02P 7/288

(54) **Verfahren zum Betreiben eines Elektromotors**
Method for operating an electric motor
Méthode d'opération d'un moteur électrique

(30) Priorität: 02.09.1991 DE 4129086
(43) Veröffentlichungstag der Anmeldung: 10.03.1993
(73) Patentinhaber: GKR, D-71701 Schwieberdingen (DE)
(72) Erfinder: Breitling, Wolfram, Dipl.-Ing., W-7123 Sachsenheim 1 (DE); Brenner, Veit-Michael, Dipl.-Ing., W-7132 Illingen (DE)
(74) Vertreter: Behrens, Ralf Holger, Dipl.-Phys.

(56) Entgegenhaltungen:
- DE-A- 2 446 300
- DE-A- 2 638 615
- DE-A- 3 426 881
- DE-A- 3 510 268
- DE-A- 4 010 022
- GB-A- 2 223 636
- ELEKTRONIK. Bd. 38, Nr. 18, 1. September 1989, MUNCHEN DE Seiten 53 - 60 H. SAX 'GLEICHSTROMMOTOREN RICHTIG ANSTEUERN'
- SIEMENS COMPONENTS Bd. 24, Nr. 6, Dezember 1989, MUNCHEN DE Seiten 241 - 242 'SERVO DRIVES WITH TCA 2465 DUAL POWER OP AMPS'

## Beschreibung

### Stand der Technik

Die Erfindung geht aus von einem Verfahren zum Betreiben eines Elektromotors nach der Gattung des Hauptanspruchs. Aus der DE-OS 40 10 022 ist eine Kontroll- und Regeleinrichtung für einen Gleichstrommotor bekannt, die in Abhängigkeit von einer Anforderung einen durch den Motor fließenden Konstantstrom vorgibt. Der Motor ist zum Betreiben eines Gebläses vorgesehen, das in einer Heizungs- und/oder Klimaanlage eines Kraftfahrzeugs vorgesehen ist. Die Vorgabe eines konstanten Stromes weist den Vorteil auf, daß das Drehmoment der üblicherweise verwendeten Elektromotoren wenigstens näherungsweise konstant bleibt. Auch bei stark unterschiedlichen Belastungen, die insbesondere während des Kraftfahrzeugbetriebs auftreten, bleibt der vom Elektromotor aufgenommene Strom konstant. Der Strom wird auch dann nicht überschritten, wenn das Gebläse beispielsweise infolge einer Belastungszunahme bis zum Stillstand abgebremst wird. Eine Überlastung des Motors ist damit ausgeschlossen. Bei der Festlegung des minimal vorgebbaren Konstantstroms ist zu beachten, daß der Motor wenigstens ein Drehmoment erzeugen kann, das oberhalb dem des Anlaufdrehmoments liegt.

Der Erfindung liegt die Aufgabe zugrunde, ein Verfahren zum Betreiben eines Elektromotors anzugeben, das ein sicheres Betreiben des Elektromotors in allen Betriebszuständen ermöglicht.

### Vorteile der Erfindung

Das erfindungsgemäße Verfahren ist im Anspruch 1 definiert. Die Ansprüche 2-4 betreffen vorteilhafte Ansführungsformen des erfindungsgemäßen Verfahrens. Die Ansprüche 5 und 6 betreffen Verwendungen des erfindungsgemäßen Verfahrens.

Das erfindungsgemäße Verfahren zum Betreiben eines Elektromotors weist den Vorteil auf, daß ein sicheres Betreiben des Elektromotors innerhalb eines großen vorgebbaren Leistungsbereiches, ausgehend vom Stillstand des Motors, möglich ist.

Die Spannungsregelung ist bei kleinen vorgegebenen Leistungen vorgesehen, die unterhalb einer vorgebbaren Schwelle liegen. Eine kleine Leistung ist gleichbedeutend mit einer kleinen Motordrehzahl, wobei die Drehzahl wenigstens näherungsweise proportional zur geregelten Motorspannung ist. Dadurch werden eine näherungsweise konstante Drehzahl sowie insbesondere ein sicherer Anlauf des Motors gewährleistet, weil der erhöhte Anlaufstrom, der zur Überwindung des Reibungsdrehmomentes benötigt wird, während der Startphase aufgrund des geringen Innenwiderstands der Spannungsquelle problemlos bereitgestellt wird.

Wenn die vom Motor abgeforderte Leistung oberhalb der vorgebbaren Schwelle liegt, wird der durch den Motor fließende Strom auf einen vorgebbaren konstanten Wert geregelt. In Abhängigkeit vom verwendeten Motortyp ist damit das abgegebene Drehmoment wenigstens näherungsweise festgelegt.

Das erfindungsgemäße Verfahren eignet sich insbesondere zum Betreiben von Motoren, die in Gebläsen von Heizung- und/oder Klimaanlagen vorgesehen sind. Insbesondere bei Gebläsen, die in Kraftfahrzeugen eingebaut sind, ist eine stark unterschiedliche Belastung in Abhängigkeit von der Fahrgeschwindigkeit zu erwarten. Nachdem die Spannungsregelung einen sicheren Anlauf des Motors gewährleistet hat, ergibt sich bei dem anschließenden stromgeregelten Betrieb des Motors bei einer Veränderung des Staudrucks am Gebläse nur eine vergleichsweise geringe Änderung des Luftdurchsatzes in einem Luftkanal.

Als Elektromotoren sind diejenigen Typen geeignet, deren Drehmoment wenigstens näherungsweise proportional zum Strom ist. Insbesondere geeignet sind Gleichstrommotoren, vorzugsweise permanentmagneterregte Gleichstrommotoren.

Vorteilhafte Weiterbildungen des erfindungsgemäßen Verfahrens ergeben sich aus Unteransprüchen.

Das erfindungsgemäße Verfahren wird insbesondere durch Sicherheitsbetriebsverfahren vorteilhaft ergänzt. Als Sicherheitsbetriebsverfahren sind eine Überstromabschaltung sowie eine Kurzschlußabschaltung vorgesehen. Diese Sicherheitsbetriebsverfahren lassen sich besonders einfach realisieren, weil die erforderlichen Sensoren für die am Motor liegende Spannung und für den durch den Motor fließen den Strom bereits vorhanden sind.

Eine weitere vorteilhafte Weiterbildung betrifft ein Sicherheitsbetriebsverfahren, bei dem die Temperatur einer Endstufe einer Motortreiberschaltung erfaßt wird, wobei eine Reduzierung der Leistungsabgabe des Elektromotors oder eine vollständige Abschaltung im Falle einer Übertemperatur vorgenommen wird.

Andere vorteilhafte Weiterbildungen und Verbesserungen des erfindungsgemäßen Verfahrens ergeben sich aus der folgenden Beschreibung.

### Zeichnung

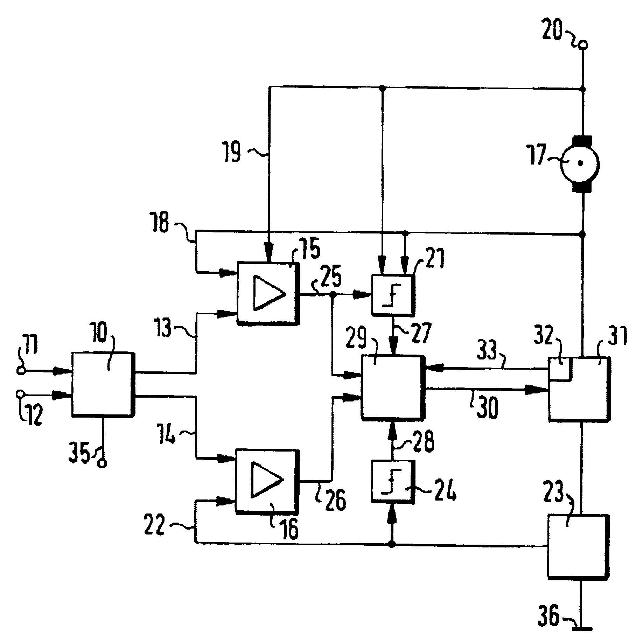

Ein Blockschaltbild einer Vorrichtung zur Durchführung eines erfindungsgemäßen Verfahrens zum Betreiben eines Elektromotors ist in der Figur dargestellt.

### Beschreibung des Ausführungsbeispiels

In der Figur ist eine Sollwertvorgabe 10 gezeigt, die in Abhängigkeit von einer manuellen Eingabe 11 oder in Abhängigkeit von einer elektrischen Anforderung 12 Sollwerte 13, 14 an einen Spannungsregler 15 und an einen Stromregler 16 abgibt.

Der Spannungsregler 15 erhält ein an einem Motor 17 abgegriffenes Spannungs-Istsignal 18 zugeführt das gegen ein Bezugspotential 19 gemessen wird. Das Bezugspotential wird an einem Motoranschluß 20 abgegriffen, der beispielsweise mit einer in der Figur nicht gezeigten Energiequelle verbindbar ist. Das Spannungs-Istsignal 18 mit dem Bezugspotential 19 wird weiterhin einem Kurzschlußdetektor 21 zugeleitet.

Der Stromregler 16 erhält ein Strom-Istsignal 22 zugeleitet, das von einem Stromsensor 23 erfaßt wird. Das Strom-Istsignal 22 wird weiterhin einem Überstrombegrenzer 24 zugeleitet.

Der Spannungsregler 15, der Stromregler 16 sowie der Kurzschlußdetektor und der Überstrombegrenzer 21 bis 24 geben Ausgangssignale 25, 26, 27, 28 an eine Auswahlschaltung 29 ab, die ihrerseits ein Steuersignal 30 an eine Motortreiberschaltung 31 abgibt. Die Schaltung 31 enthält Mittel 32 zum Erfassen einer Endstufentemperatur, die ein Temperatursignal 33 an die Auswahlschaltung 29 abgeben. Das Ausgangssignal 25 des Spannungsreglers 15 wird weiterhin dem Kurzschlußdetektor 21 zugeleitet.

Die Sollwertvorgabe 10 gibt in Abhängigkeit von einer vorgebbaren Schwelle 35 entweder den Spannungs-Sollwert 13 oder den Strom-Sollwert 14 aus.

Das erfindungsgemäße Verfahren wird anhand des in der Figur gezeigten Blockschaltbilds näher erläutert: In Abhängigkeit von der manuellen Eingabe 11 oder von der elektrischen Anforderung 12 gibt die Sollwertvorgabe 10 den Spannungs-Sollwert 13 oder den Strom-Sollwert 14 vor. Eine manuelle Eingabe ist beispielsweise ein von einer Bedienperson betätigbarer Drehregler, während die elektrische Anforderung 12 beispielsweise von einem Steuergerät einer Heizung- und/oder Klimaanlage kommt. Die Sollwertvorgabe 10 legt im wesentlichen die vom Elektromotor 17 abzugebende Leistung fest, die der elektrischen aufgenommenen Leistung unter Berücksichtigung des Wirkungsgrades entspricht. Als Elektromotor 17 ist vorzugsweise ein Gleichstrommotor vorgesehen, bei dem das erzeugte Drehmoment wenigstens näherungsweise proportional zum Strom ist. Derartige Kennlinien weisen beispielsweise fremderregte oder permanentmagneterregte sowie elektronisch kommutierte Gleichstrommotoren auf. Anstelle einer Leistungsvorgabe für den Elektromotor ist es ausreichend, den Motor 17 entweder an einer Spannungs- oder an einer Stromquelle zu betreiben. Die Motortreiberschaltung 31 ist derart ausgestaltet, daß sie in Abhängigkeit von dem Steuersignal 30 den Elektromotor entweder an einer konstanten Spannung oder an einem konstanten Strom betreiben kann. Das Steuersignal 30 wird von der Auswahlschaltung 29 entweder von dem Ausgangssignal 25 des Spannungsreglers 15 oder von dem Ausgangssignal 26 des Stromreglers 16 abgeleitet. Die Auswahlschaltung 29 läßt sich beispielsweise einfach dadurch realisieren, daß die beiden Ausgangssignale 25, 26 mit Hilfe von Entkopplungdioden zusammengeführt werden. Die Auswahl, ob der Spannungsregler 15 oder der Stromregler 16 aktiv sein soll, wird von der Sollwertvorgabe 10 anhand der Schwelle 35 entschieden. Die Schwelle 35 ist derart festzulegen, daß bei einer kleinen Sollwertvorgabe, die einer geringen abzugebenden Leistung des Elektromotors entspricht, der Spannungsregler 15 aktiv sein soll und bei Überschreiten der Schwelle 35, die einer Vorgabe einer erhöhten Leistung entspricht, der Stromregler 16 zuständig sein soll. Die Schwelle 35 kann vorzugsweise experimentell bestimmt werden und innerhalb der Sollwertvorgabe 10 festgelegt sein.

Die Spannungsregelung bei kleinen Motorleistungen weist den Vorteil auf, daß bei kleiner Leistung die Motordrehzahl wenigstens näherungsweise proportional zur geregelten Spannung am Motor 17 ist. Dadurch werden eine konstante Drehzahl sowie ein sicherer Anlauf des Motors 17 gewährleistet, weil der erhöhte Anlaufstrom, der zur Überwindung von Motorverlusten benötigt wird, während der Startphase aufgrund des geringen Innenwiderstands einer Spannungsquelle problemlos bereitgestellt werden kann. Die Spannungsquelle wird durch den Spannungsregler 15 und die Schaltung 31 gebildet.

Wenn der Motor 17 mit einer konstanten Last beaufschlagt wäre, würde eine Spannungsregelung ausreichen. Der Motor 17, der vorzugsweise in einem Gebläse einer Heizungs- und/oder einer Klimaanlage vorgesehen ist, wird jedoch mit einer unterschiedlichen Last beaufschlagt, die insbesondere dann stark unterschiedlich sein kann, wenn die Heizungs- und/oder Klimaanlage in einem Kraftfahrzeug eingebaut ist. Bei einer höheren Leistung im Konstantspannungsbetrieb ändert sich das vom Motor 17 erzeugte Drehmoment bei einer Laständerung, die beispielsweise von einer Staudruckänderung verursacht ist. Dadurch würde sich auch ein Luftdurchsatz in einem Luftkanal ändern. Diesem Effekt kann mit einer Stromregelung begegnet werden, bei welcher der durch den Motor 17 fließende Strom bei einer Sollwertvorgabe, die oberhalb der Schwelle 35 liegt, konstant gehalten wird. Bei einer Stromregelung ist das erzeugte Drehmoment des Motors 17 wenigstens näherungsweise proportional zum Strom. Dadurch ergibt sich der Vorteil, daß der Luftdurchsatz im Gebläse wenigstens näherungsweise konstant ist, wobei die Drehzahl bei einer Belastungszunahme des Motors absinkt, die durchgesetzte Luftmenge jedoch nicht.

Die vorteilhafte Stromregelung bei höheren Leistungen hätte bei geringen Leistungen oder bei Anfahren des Motors 17 aus dem Stillstand den Nachteil, daß der erhöhte Anlaufstrom zur Überwindung der Motorverluste beim Hochlauf auf niedrige Drehzahlen nicht bereitgestellt werden könnte. In diesem Bereich ist deshalb die Spannungsregelung vorteilhaft einzusetzen. Der Übergang von Spannungs- auf Stromregelung liegt beispielsweise bei einer Motorspannung, die etwa im Bereich zwischen 20 bis 80% der Motornennspannung liegt.

Bei dem in der Figur gezeigten Blockschaltbild ist die Schwelle 35 der Sollwertsvorgabe 10 zugeordnet. In einer anderen Ausführung ist es möglich, die Schwelle der Auswahlschaltung 29 zuzuordnen. In Abhängigkeit von der Schwelle 35 wählt dann die Auswahlschaltung 29 eines von den beiden gleichzeitig angebotenen Ausgangssignalen 25, 26 des Spannungsreglers 15 und des Stromreglers 16 aus.

In einem anderen Ausführungsbeispiel des Blockschaltbilds ist anstelle der beiden Regler 15, 16 lediglich ein Regler vorgesehen, wobei die beiden Istsignale 18, 22 einer nicht dargestelten Auswahlschaltung zuzuleiten sind, die in Abhängigkeit von der Schwelle 35 die Weiterleitung des Ist-Signals vornimmt.

In einer Weiterbildung des erfindungsgemäßen Verfahrens ist eine Kurzschlußabschaltung des Motors 17 vorgesehen. Der Kurzschlußdetektor 21 stellt in Abhängigkeit von dem am Motor 17 liegenden Spannungsgefälle im Vergleich zum Ausgangssignal 25 des Spannungsreglers 15 fest, ob ein Kurzschluß vorliegt oder nicht. Falls eine intern vorgebbare Kurzschlußschwelle überschritten wird, gibt der Kurzschlußdetektor 21 das Ausgangssignal 27 an die Auswahlschaltung 29 ab. Die Ausgabe des Steuersignals 30 kann dann unterbunden werden. Das Ausgangssignal 27 kann ebenso der Schaltung 31 oder dem Spannungsregler 15 zugeleitet werden.

In einer anderen vorteilhaften Weiterbildung ist eine Überstrombegrenzung des durch den Motor 17 fließenden Stroms vorgesehen. Das vom Stromsensor 23 abgegebene Strom-Istsignal 22 wird im Überstrombegrenzer 24 mit einer intern vorgebbaren Schwelle verglichen. Nach einer Schwellenüberschreitung gibt der Überstrombegrenzer 24 das Ausgangssignal 28 an die Auswahlschaltung 29 zum Unterdrücken des Steuersignals 30 ab. Das Ausgangssignal 28 kann auch der Schaltung 31 oder dem Stromregler 16 zugeleitet werden.

Eine vorteilhafte Weiterbildung des erfindungsgemäßen Verfahrens betrifft eine Übertemperaturabschaltung des Elektromotors oder zumindest eine Leistungsreduzierung beim Überschreiten einer vorgebbaren Temperatur. Erfaßt wird hierbei die Temperatur einer Endstufe oder Schaltung 31 mit Mitteln 32 zur Temperaturerfassung. Eine thermische Belastung der Endstufe ist insbesondere dann gegeben, wenn die Endstufe als analoge Verstärkerschaltung realisiert ist, die einen vergleichsweise niedrigen Wirkungsgrad und entsprechend hohe Verluste aufweisen kann. Das von den Mitteln 32 zur Temperaturerfassung der Endstufe abgegebene Temperatursignal 33 ist entweder der Schaltung 31 intern oder - wie in der Figur gezeigt - der Auswahlschaltung 29 zum Unterdrücken des Steuersignals 30 zugeführt. Neben einer Abschaltung des Motors 17 beim Überschreiten einer vorgebbaren Temperatur ist eine Reduzierung der abzugebenden Leistung vom Motor 17 vorsehbar. Das Temperatursignal 33 kann hierzu entweder der Schaltung 31 oder den Reglern 15, 16 zugeleitet werden.

## Patentansprüche

1. Verfahren zum Betreiben eines Elektromotors, bei dem die Leistung des Motors veränderbar ist, mit einer Sollwertvorgabe, dadurch gekennzeichnet, daß bei einem Sollwert (11, 12), der unterhalb einer vorgebbaren Schwelle (35), entsprechend einer niedrigen Motorleistung, liegt, die am Motor (17) liegende Spannung geregelt wird und daß bei einem Sollwert (11, 12) der oberhalb der Schwelle (35), entsprechend einer höheren Leistung, liegt, der durch den Motor (17) fließende Strom geregelt wird.

2. Verfahren nach Anspruch 1, dadurch gekennzeichnet, daß eine Abschaltung oder eine Leistungsreduzierung des Motors (17) vorgesehen ist, wenn ein Überstrombegrenzer (24) einen Strom detektiert, der oberhalb einer vorgebbaren Schwelle liegt.

3. Verfahren nach Anspruch 1 oder 2, dadurch gekennzeichnet, daß eine Abschaltung des Motors (17) vorgenommen wird, wenn ein Kurzschlußdetektor (21) einen Kurzschluß am Motor (17) detektiert.

4. Verfahren nach einem der Ansprüche 1 bis 3, dadurch gekennzeichnet, daß eine Abschaltung oder eine Leistungsreduzierung des Motors (17) vorgenommen wird, wenn die Temperatur einer Endstufe in einer Motortreiberschaltung (31) eine vorgebbare Temperatur überschritten hat.

5. Verwendung des Verfahrens nach einem der vorhergehenden Ansprüche bei einem in einem Gebläse angeordneten Motor (17).

6. Verwendung nach Anspruch 5, dadurch gekennzeichnet, daß das Gebläse in einer Heizungs- und/oder Klimaanlage eines Kraftfahrzeugs angeordnet ist.

## Claims

1. Method for operating an electric motor, in the case of which method the power of the motor can be varied, having a required value preset, characterized in that, in the case of a required value (11, 12) which is below a presettable threshold (35) corresponding to a low motor power, the voltage applied to the motor (17) is regulated, and in that, in the case of a required value (11, 12) which is above the threshold (35), corresponding to a higher power, the current flowing through the motor (17) is regulated.

2. Method according to Claim 1, characterized in that provision is made for the motor (17) to be turned off or for its power to be reduced if an overcurrent limiter (24) detects a current which is above a preset-table threshold.

3. Method according to Claim 1 or 2, characterized in that the motor (17) is turned off if a short-circuit detector (21) detects a short circuit on the motor (17).

4. Method according to one of Claims 1 to 3, characterized in that the motor (17) is turned off or its power is reduced if the temperature of an output stage in a motor driver circuit (31) has exceeded a presettable temperature.

5. Use of the method according to one of the preceding claims in the case of a motor (17) which is arranged in a fan.

6. Use according to Claim 5, characterized in that the fan is arranged in a heating and/or air-conditioning system of a motor vehicle.

## Revendications

1. Procédé d'exploitation d'un moteur électrique dans lequel la puissance du moteur peut varier avec la pré-définition d'une valeur de consigne, caractérisé en ce que pour une valeur de consigne imposée (11, 12) inférieure à un seuil (35) donné et correspondant à une faible puissance de moteur, la tension aux bornes de ce moteur est régulée, tandis que, pour une valeur de consigne imposée (11, 12) dépassant le seuil (35) et correspondant à une puissance plus élevée, c'est l'intensité du courant traversant le moteur (17) qui est régulée.

2. Procédé selon la revendication 1, caractérisé en ce qu'il prévoit une coupure ou une réduction de la puissance du moteur (17) si un limiteur de surintensité (24) détecte que le courant a dépassé un seuil prédéterminé.

3. Procédé selon la revendication 1 ou 2, caractérisé en ce que l'alimentation du moteur (17) est coupée si un détecteur de court-circuit (21) détecte un court-circuit au niveau du moteur (17).

4. Procédé selon une des revendications 1 à 3, caractérisé en ce qu'une coupure ou une réduction de la puissance du moteur (17) a lieu lorsque la température d'un étage de sortie d'un circuit (31) d'alimentation du moteur dépasse une valeur donnée.

5. Utilisation du procédé selon une des revendications précédentes pour un moteur (17) de ventilateur.

6. Utilisation selon la revendication 5, caractérisée en ce que le ventilateur fait partie d'une installation de chauffage et/ou de climatisation d'une automobile.
